# EUROPEAN PATENT SPECIFICATION

(11) **EP 4 425 375 B1**
(45) Date of publication and mention of the grant of the patent: **26.08.2026**
(21) Application number: 21967192.2
(22) Date of filing: 08.12.2021
(51) Int. Cl.: G06N 3/02, G06N 3/045, G06N 3/063

(54) **INFERENCE DEVICE, CALCULATION DEVICE, SETTING METHOD, CALCULATION METHOD, AND CALCULATION PROGRAM**
INFERENZVORRICHTUNG, BERECHNUNGSVORRICHTUNG, EINSTELLVERFAHREN, BERECHNUNGSVERFAHREN UND BERECHNUNGSPROGRAMM
DISPOSITIF D'INFÉRENCE, DISPOSITIF DE CALCUL, PROCÉDÉ DE RÉGLAGE, PROCÉDÉ DE CALCUL ET PROGRAMME DE CALCUL

(43) Date of publication of application: 04.09.2024
(73) Proprietor: NTT, Inc., Tokyo 100-8116 (JP)
(72) Inventor: YOSHIDA, Shuhei, Musashino-shi, Tokyo 180-8585 (JP); HATTA, Saki, Musashino-shi, Tokyo 180-8585 (JP); UZAWA, Hiroyuki, Musashino-shi, Tokyo 180-8585 (JP); IINUMA, Yuko, Musashino-shi, Tokyo 180-8585 (JP); OMORI, Yuya, Musashino-shi, Tokyo 180-8585 (JP); KOBAYASHI, Daisuke, Musashino-shi, Tokyo 180-8585 (JP); NAKAMURA, Ken, Musashino-shi, Tokyo 180-8585 (JP)
(74) Representative: DREISS Patentanwälte PartG mbB
(86) International application number: PCT/JP2021/045207
(87) International publication number: WO 2023/105694

(56) References cited:
- US-A1- 2019 220 734
- JUNG DAEJIN ET AL: "Partitioning Compute Units in CNN Acceleration for Statistical Memory Traffic Shaping", IEEE COMPUTER ARCHITECTURE LETTERS, IEEE, USA, vol. 17, no. 1, 1 January 2018 (2018-01-01), pages 72 - 75, XP011678947, ISSN: 1556-6056, [retrieved on 20180314], DOI: 10.1109/LCA.2017.2773055
- WANG JICHEN ET AL: "Bandwidth Efficient Architectures for Convolutional Neural Network", 2018 IEEE INTERNATIONAL WORKSHOP ON SIGNAL PROCESSING SYSTEMS (SIPS), IEEE, 21 October 2018 (2018-10-21), pages 94 - 99, XP033490342, DOI: 10.1109/SIPS.2018.8598291
- SHEN YONGMING ET AL: "Maximizing CNN accelerator efficiency through resource partitioning", 2017 ACM/IEEE 44TH ANNUAL INTERNATIONAL SYMPOSIUM ON COMPUTER ARCHITECTURE (ISCA), ACM, 24 June 2017 (2017-06-24), pages 535 - 547, XP033268545, DOI: 10.1145/3079856.3080221
- FANG SHAOXIA; ZENG SHULIN; WANG YU: "Optimizing CNN Accelerator With Improved Roofline Model", 2020 IEEE 33RD INTERNATIONAL SYSTEM-ON-CHIP CONFERENCE (SOCC), IEEE, 8 September 2020 (2020-09-08), pages 90 - 95, XP033968577, DOI: 10.1109/SOCC49529.2020.9524754

## Description

### Technical Field

The disclosed technology relates to an inference device, a calculation device, a setting method, a calculation method, and a calculation program.

### Background Art

In recent years, research and development related to CNN inference processing accelerators have been actively conducted in order to apply image recognition or object recognition using a convolutional neural network (CNN) to use cases such as surveillance cameras and drones for which real-time property, power saving, and area saving are required. Furthermore, there is also an approach to enable inference processing using a 4K or 8K high-definition video as an input. Since the input image size of a CNN model is limited, a method of processing divided input images in parallel by a plurality of inference cores is common. However, parallelization of the inference cores causes an increase in the external memory bandwidth, and thus the external memory bandwidth tends to be a bottleneck of processing performance.

As a method of reducing the external memory bandwidth in CNN inference processing, a layer fusion (layer integration) method is proposed (Non Patent Literature 1). In the method described in Non Patent Literature 1, as illustrated in Fig. 1, a plurality of layers are continuously processed in units of tiles obtained by dividing input data into grids. As a result, the amount of output data of each layer can be reduced to such an extent as to be stored in an internal memory. As a result, the data that had been transferred to the external memory can be held in the internal memory, and the external memory bandwidth can be reduced. Here, a section of layers to be continuously processed is referred to as a "layer integration section". In general, processing is performed by partitioning the CNN model into several layer integration sections. In the start and end layers of the layer integration section, data transfer to the external memory occurs.

### Citation List

### Non Patent Literature

Non Patent Literature 1: Fabrizio Indirli, Ahmet Erdem, and Cristina Silvano, "A Tile-based Fused-layer CNN Accelerator for FPGAs", 2020 27th IEEE International Conference on Electronics, Circuits and Systems (ICECS). JUNG DAEJIN ET AL: "Partitioning Compute Units in CNN Acceleration for Statistical Memory Traffic Shaping", IEEE COMPUTER ARCHITECTURE LETTERS, IEEE, USA, vol. 17, no. 1, 1 January 2018 (2018-01-01), pages 72-75, XP011678947, ISSN: 1556-6056, DOI: 10. 1109/LCA.2017.2773055, discloses partitioning compute Units in CNN acceleration for statistical memory traffic shaping. WANG JICHEN ET AL: "Bandwidth Efficient Architectures for Convolutional Neural Network", 2018 IEEE INTERNATIONAL WORKSHOP ON SIGNAL PROCESSING SYSTEMS (SIPS), IEEE, 21 October 2018 (2018-10-21), pages 94-99, XP033490342, DOI: 10.1109/SIPS.2018.8598291, discloses bandwidth efficient architectures for convolutional neural network. SHEN YONGMING ET AL: "Maximizing CNN accelerator efficiency through resource partitioning", 2017 ACM/IEEE 44TH ANNUAL INTERNATIONAL SYMPOSIUM ON COMPUTER ARCHITECTURE (ISCA), ACM, 24 June 2017 (2017-06-24), pages 535-547, XP033268545, DOI: 10.1145/3079856.3080221, discloses maximizing CNN accelerator efficiency through resource partitioning.

### SUMMARY OF INVENTION

### Technical Problem

By the method described in Non Patent Literature 1, the external memory bandwidth per inference core can be reduced. However, when the inference cores are parallelized for high-definition video processing or the like, there is still a problem that the external memory bandwidth increases in proportion to the number of inference cores.

The disclosed technology has been made in view of the above points, and an object thereof is to reduce an external memory bandwidth in a case where inference cores are parallelized by a CNN inference processing accelerator.

### Solution to Problem

A first aspect of the present disclosure is an inference device as defined by claim 1.

A second aspect of the present disclosure is a calculation device as defined by claim 5.

A third aspect of the present disclosure is a setting method as defined by claim 6.

A fourth aspect of the present disclosure is a calculation method as defined by claim 7.

A fifth aspect of the present disclosure is a calculation program as defined by claim 8.

### Advantageous Effects of Invention

According to the disclosed technology, it is possible to reduce an external memory bandwidth in a case where inference cores are parallelized by a CNN inference processing accelerator.

### BRIEF DESCRIPTION OF DRAWINGS

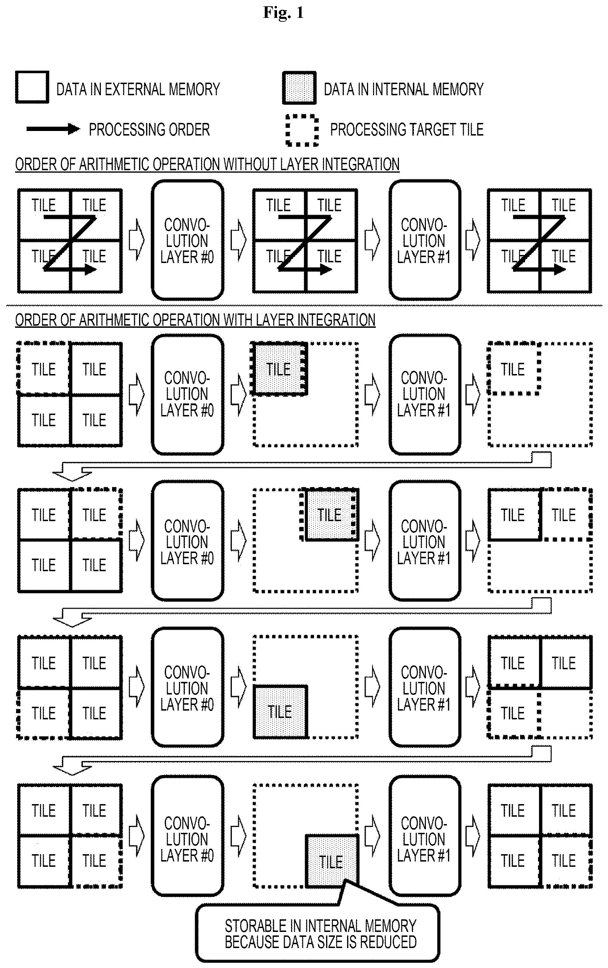

Fig. 1 is a diagram for describing a conventional layer integration method.
Fig. 2 is a block diagram illustrating a hardware configuration of an inference device.
Fig. 3 is a functional block diagram of an inference device according to a first embodiment.
Fig. 4 is a diagram illustrating an example of partitioning of layer integration sections.
Fig. 5 is a flowchart illustrating a flow of setting processing.
Fig. 6 is a diagram for describing a specific example of calculation of an external memory bandwidth.
Fig. 7 is a diagram for describing a specific example of calculation of an external memory bandwidth.
Fig. 8 is a diagram for describing a specific example of calculating a band total of an external memory.
Fig. 9 is a functional block diagram of a calculation device and an inference device according to a second embodiment.
Fig. 10 is a block diagram illustrating a hardware configuration of a calculation device.

### DESCRIPTION OF EMBODIMENTS

Hereinafter, an example of embodiments of the disclosed technology will be described with reference to the drawings. Note that same or equivalent components and parts are denoted by the same reference numerals in the drawings. Furthermore, dimensional ratios in the drawings are exaggerated for convenience of description and thus may be different from actual ratios.

### <First Embodiment>

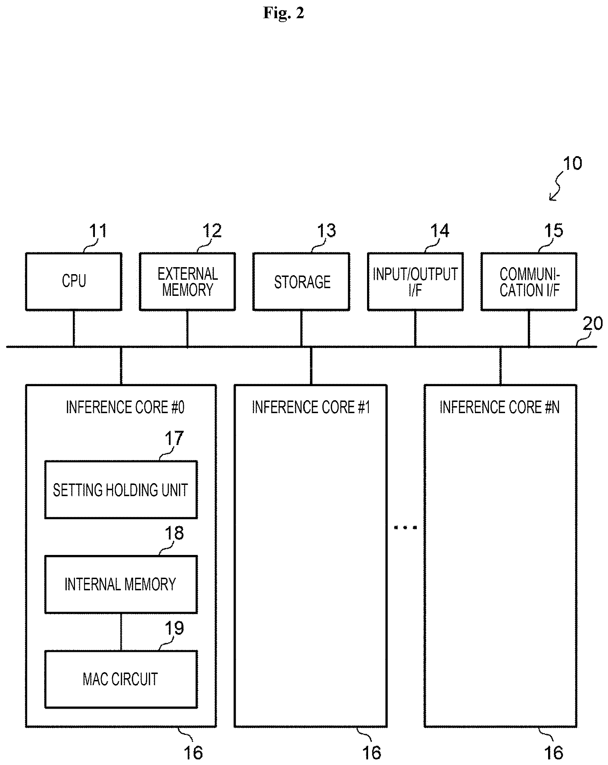

Fig. 2 is a block diagram illustrating a hardware configuration of an inference device 10 according to a first embodiment. As illustrated in Fig. 2, the inference device 10 includes a central processing unit (CPU) 11, an external memory 12, a storage 13, an input/output interface (I/F) 14, a communication I/F 15, and a plurality of inference cores 16. The components are communicatively connected to each other via a bus 20.

The CPU 11 is a central processing unit, which executes various programs and controls each unit. That is, the CPU 11 reads a program from the storage 13 and executes the program using the external memory 12 as a work area. The CPU 11 performs control of each of the components described above and various types of arithmetic processing according to a program stored in the storage 13. In the present embodiment, the storage 13 stores a setting program for executing setting processing to be described later.

The external memory 12 temporarily stores a program or data as a work area. The external memory 12 is implemented by, for example, a double-data-rate synchronous dynamic random access memory (DDR SDRAM), or the like. The storage 13 stores various programs and various types of data. The storage 13 is implemented by, for example, a hard disk drive (HDD), a solid state drive (SSD), or the like.

The input/output I/F 14 is an interface for connecting to an external device such as an input device including a mouse and a keyboard, or an output device including a display and a printer. The communication I/F 15 is an interface for communicating with other devices. For the communication, for example, a wired communication standard such as Ethernet (registered trademark) or FDDI, or a wireless communication standard such as 4G, 5G, or Wi-Fi (registered trademark) is used.

The plurality of inference cores 16 has the same configuration. In the example of Fig. 2, the inference device 10 includes N + 1 inference cores 16, and numbers 0, 1, ..., and N are assigned to the inference cores 16. The number of inference cores 16 included in the inference device 10 may be an arbitrary number. Hereinafter, each inference core will be denoted as an "inference core 16" in a case where the inference cores are described without distinction, and will be denoted as an "inference core #m" in a case where the inference cores are described with distinction. Here, m is a number of the inference core 16.

The inference core 16 is an integrated circuit that performs inference processing in the CNN. The inference core 16 is implemented by, for example, a field-programmable gate array (FPGA) or the like. The inference core 16 includes a setting holding unit 17, an internal memory 18, and a multiply accumulation (MAC) circuit 19.

The setting holding unit 17 holds settings necessary for inference processing executed by the corresponding inference core 16. The setting holding unit 17 is implemented by, for example, a register or the like. The internal memory 18 is a memory that holds data necessary for various arithmetic operations and arithmetic operation results, and is an on-chip memory module mounted inside the inference core 16. Specifically, input data of CNN inference processing stored in the external memory 12 is temporarily transferred to the internal memory 18 in order to be processed by the inference core 16. Furthermore, the internal memory 18 temporarily holds input/output data of an intermediate layer of a layer integration section (details will be described later) when processing is performed by the layer integration scheme. The MAC circuit 19 is an arithmetic circuit designed to perform convolution processing in CNN inference processing.

The inference device 10 has an architecture in which the internal memory 18 is provided for each inference core 16 as described above, and the external memory 12 is shared among the inference cores 16. Note that although not illustrated in Fig. 2, in a case where the CNN model includes a layer other than the convolution layer such as the Maxpooling layer or the Residual layer, an arithmetic operation unit for performing arithmetic processing of the layer is separately provided in the inference core 16.

Next, a functional configuration of the inference device 10 will be described.

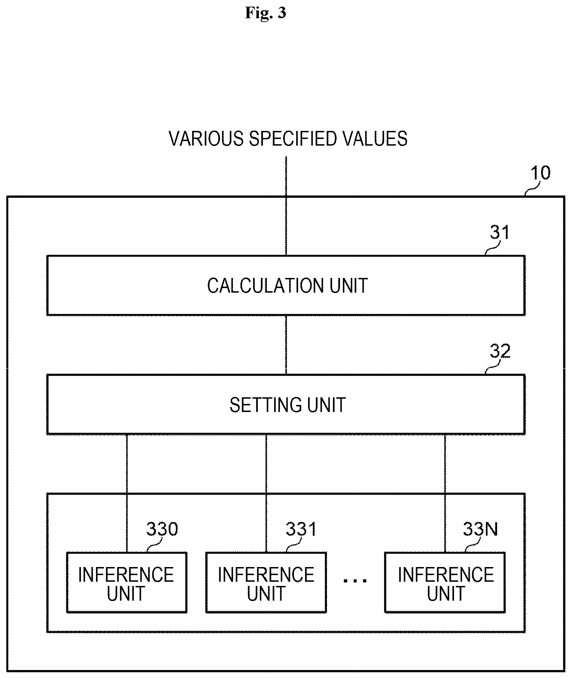

Fig. 3 is a block diagram illustrating an example of the functional configuration of the inference device 10. As illustrated in Fig. 3, the inference device 10 includes, as functional configurations, a calculation unit 31, a setting unit 32, and a plurality of inference units 330, 331, ..., and 33N. The inference unit 330 is implemented by the inference core #0 illustrated in Fig. 2, the inference unit 331 is implemented by the inference core #1, and the inference unit 33N is implemented by the inference core #N. Hereinafter, each of the inference units 330, 331, ..., and 33N will be referred to as an "inference unit 33" when described without distinction.

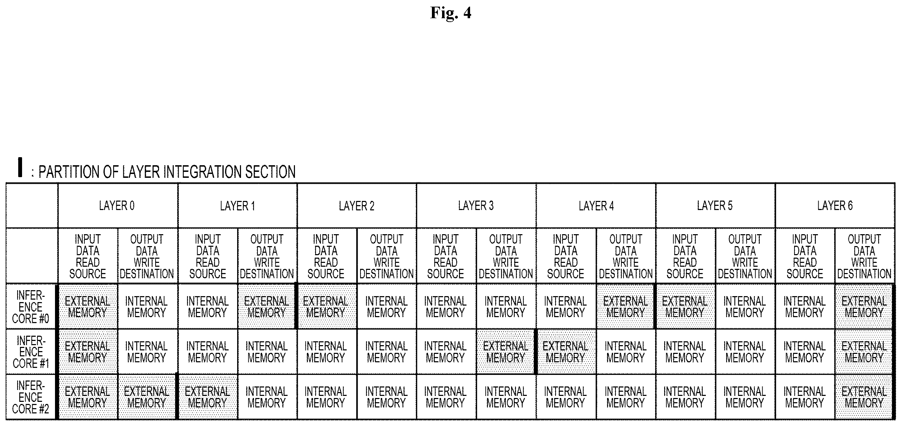

The calculation unit 31 calculates a different partitioning method of the layer integration section for each inference unit 33. The layer integration section is obtained by integrating a plurality of layers of CNN. Fig. 4 illustrates an example of partitioning of the layer integration section. In the example of Fig. 4, the CNN model includes a total of seven layers of layer 0 to layer 6. This is an example of a case where the inference cores 16 corresponding to the inference units 33 are three inference cores #0, #1, and #2. As illustrated in Fig. 4, the timing of data transfer to the external memory 12 is shifted by providing a different partitioning method of the layer integration section for each inference unit 33, that is, by setting the layer integration section so that the start layer and the end layer of the layer integration sections of the inference cores 16 do not overlap. As a result, the band of the external memory 12 in a case where the inference cores 16 are parallelized is smoothed, and as a result, the band of the external memory 12 can be reduced.

Specifically, the calculation unit 31 calculates the band of the external memory 12 to be used for each layer integration section set for each inference unit 33. More specifically, the calculation unit 31 acquires a band used for reading input data of the first layer in the layer integration section from the external memory 12 and writing output data of the last layer in the layer integration section to the external memory 12. Then, the calculation unit 31 calculates the band of the external memory 12 to be used for each layer integration section on the basis of each acquired band. Furthermore, the calculation unit 31 calculates the partitioning method of the layer integration section in which the maximum value of a band total obtained by adding the bands of the external memory 12 calculated for each inference unit 33 for each layer is equal to or less than a predetermined target value. The calculation unit 31 notifies the setting unit 32 of the calculated partition of the layer integration section that differs among the inference units 33.

The setting unit 32 sets, for each of the plurality of inference units 33, the partition of the layer integration section different for each of the inference units 33 notified from the calculation unit 31.

The inference unit 33 performs convolution processing on the input data by a layer integration method on the basis of the partition of the layer integration section set by the setting unit 32.

Next, an operation of the inference device 10 according to the first embodiment will be described.

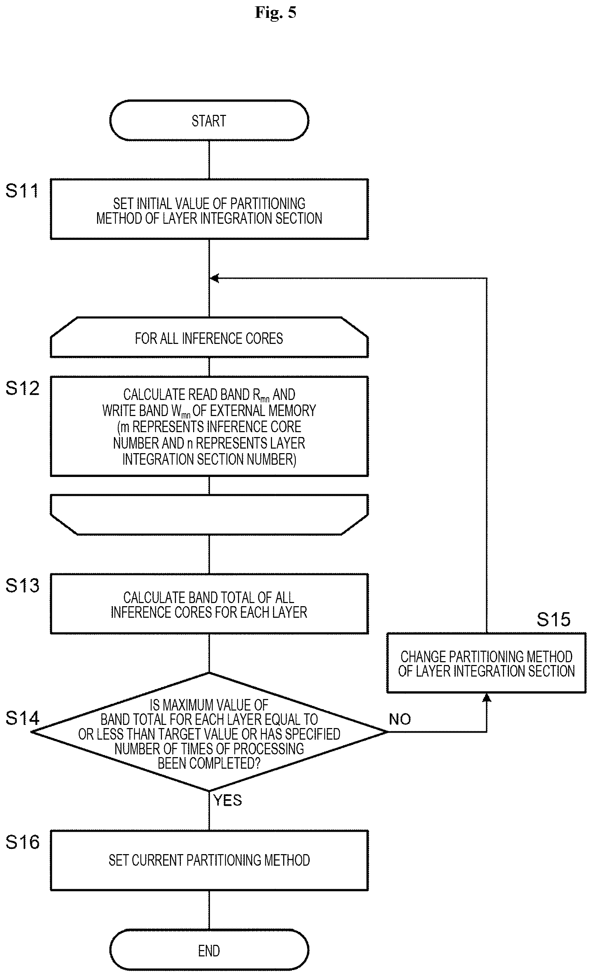

Fig. 5 is a flowchart illustrating a flow of setting processing performed by the inference device 10. The CPU 11 reads a setting program from the storage 13, develops the setting program in the external memory 12, and executes the setting program, thereby performing the setting processing. Note that the setting processing is an example of a setting method of the disclosed technology.

In step S11, the CPU 11, as the calculation unit 31, sets an initial value of the partitioning method of the layer integration section in each inference core 16 (inference unit 33). The initial value may be given from the outside, or an initial value stored in advance in a predetermined storage area of the inference device 10 may be read and used.

Next, in step S12, the CPU 11, as the calculation unit 31, calculates the external memory bandwidth per inference core 16 on the basis of the currently set partitioning method of the layer integration section for all the inference cores 16. Specifically, the CPU 11, as the calculation unit 31, calculates an external memory read band that is a band of the external memory 12 in which data is read from the inference core 16 and an external memory write band that is a band of the external memory 12 in which data is written from the inference core 16.

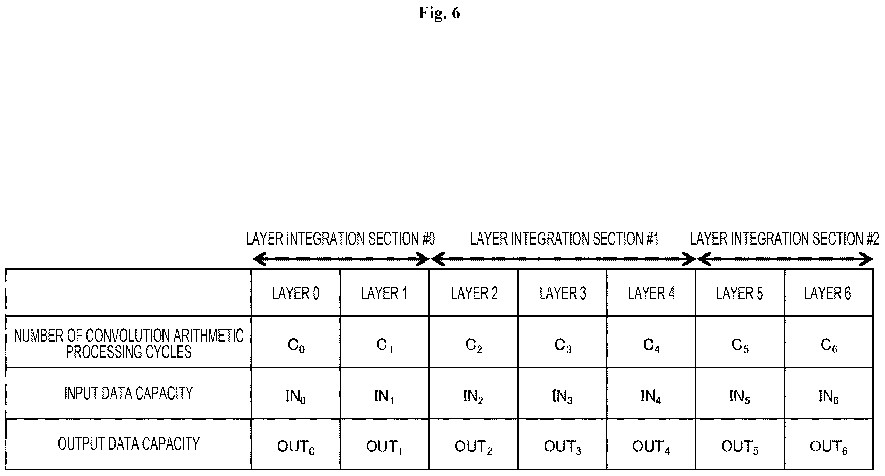

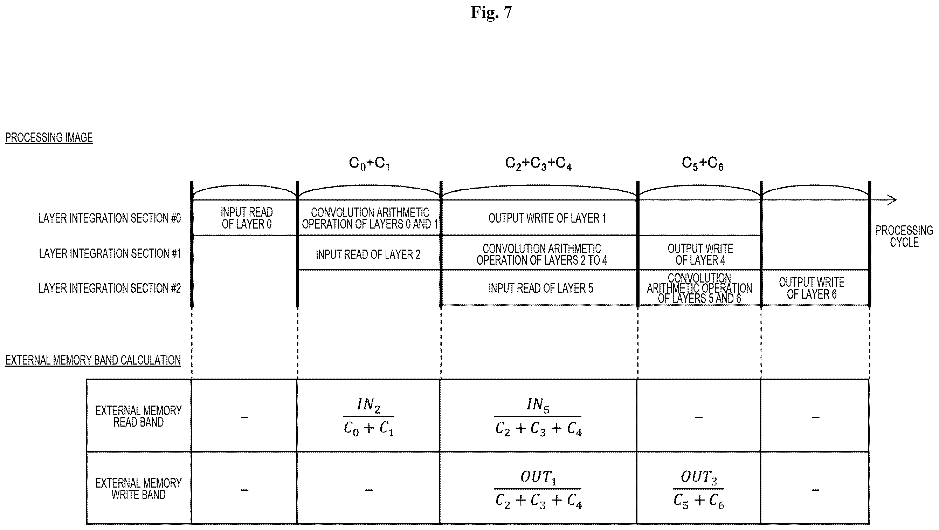

A specific example of calculation of the external memory bandwidth will be described with reference to Figs. 6 and 7. Fig. 6 is an example of the partitioning method of the layer integration section in the CNN model. In Fig. 6, n of a layer integration section #n is the number of the layer integration section. The same applies to the following drawings. In the example of Fig. 6, the CNN model includes seven layers, and layer 0 and layer 1 are partitioned into a layer integration section #0, layer 2, layer 3, and layer 4 are partitioned into a layer integration section #1, and layer 5 and layer 6 are partitioned into a layer integration section #2. Furthermore, it is assumed that the number of convolution arithmetic processing cycles, the input data capacity, and the output data capacity in each layer are given from the outside in advance.

The upper diagram of Fig. 7 illustrates a processing image in the case of the example of Fig. 6. Here, only a processing image for one inference core 16 is illustrated. The processing of each layer integration section is roughly divided into the following three processing. The first is reading of input data of the first layer in the layer integration section from the external memory 12, the second is convolution arithmetic processing of all layers in the layer integration section, and the third is writing of output data of the last layer in the layer integration interval to the external memory 12. The processing of each layer integration section is based on the premise that pipeline processing is performed by overlapping the above three processing.

The calculation unit 31 calculates the number of cycles required for the convolution arithmetic processing among the three processing by adding the number of convolution arithmetic processing cycles in each layer given in advance from the outside. The number of cycles that can be used to read input data of the first layer in the layer integration section from the external memory 12 and write output data of the last layer in the layer integration section to the external memory 12 is the same as the number of cycles required for the overlapping convolution arithmetic processing. Furthermore, the calculation unit 31 determines the transfer data capacity required to be transferred in each of the read from the external memory 12 and the write to the external memory 12 on the basis of the input data capacity and the output data capacity of each layer given from the outside in advance. As illustrated in the lower diagram of Fig. 7, the calculation unit 31 calculates a value obtained by dividing the determined transfer data capacity by the number of cycles that can be used for each of reading from the external memory 12 and writing to the external memory 12 as the external memory read band and the external memory write band.

Note that the band with "-" in the lower diagram of Fig. 7 depends on processing before and after the processing range illustrated in this example, and thus it means that the band is omitted, but in reality, the band needs to be calculated. Note, however, that since the number of cycles that can be used for each processing cannot be obtained from the number of other processing cycles for the first input read and the last output write of the entire processing, the number of cycles that can be used for each processing is given in advance.

Next, in step S13, the CPU 11, as the calculation unit 31, adds the external memory read band and the external memory write band calculated for all the inference cores 16 for each layer and calculates the band total of the external memory 12 for each layer.

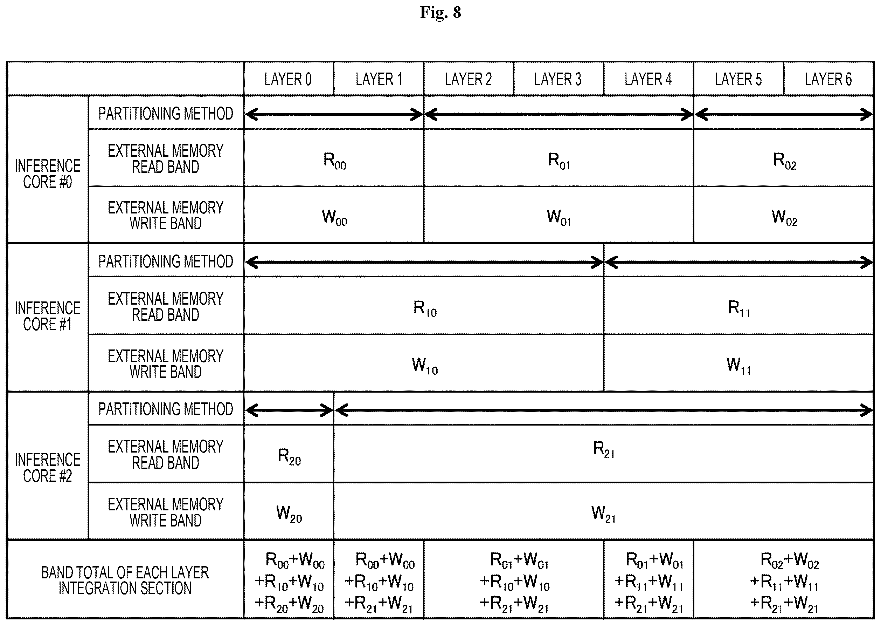

A specific example of calculating the band total of the external memory 12 in the plurality of inference cores 16 will be described with reference to Fig. 8. Here, the external memory read band and the external memory write band for each layer integration section of each inference core 16 calculated as illustrated in Fig. 7 are denoted as Rₘₙ and Wₘₙ, respectively. Here, m represents the number of the inference core 16, and n represents the number of the layer integration section. This example is a case including three inference cores 16 of the inference core #0, the inference core #1, and the inference core #2. As illustrated in Fig. 8, each of the inference cores 16 has a different partitioning method of the layer integration section. The calculation unit 31 calculates a sum of the external memory read band Rₘₙ and the external memory write band Wₘₙ calculated for each inference core 16 for each layer (vertical direction in Fig. 8) as a band total of each layer. Note that in the example of Fig. 8, the band total of each layer is the same for layer 2 and layer 3, and the same for layer 5 and layer 6.

Next, in step S14, the CPU 11, as the calculation unit 31, determines whether or not the maximum value of the band total for each layer is equal to or less than a target value given from the outside in advance. When the value is equal to or less than the target value, the processing proceeds to step S16, and when the value exceeds the target value, the processing proceeds to step S15. Furthermore, when the above processing loop is repeated a specified number of times, too, the processing proceeds to step S16.

In step S15, the CPU 11, as the calculation unit 31, changes the partitioning method of the layer integration section. The way of changing the partitioning method is not particularly specified. As an example, it is conceivable to change the method randomly. Then, the processing returns to step S12.

On the other hand, in step S16, the CPU 11, as the calculation unit 31, notifies the setting unit 32 of the current partitioning method of the layer integration section, notifies each inference core 16 of the setting necessary for the operation via the setting unit 32, and ends the setting processing.

As described above, the inference device according to the first embodiment calculates, for each of the plurality of inference units that performs convolution processing on input data by the layer integration scheme for each layer integration section in which a plurality of layers of the CNN is integrated, a different partitioning method of the layer integration section for each inference unit. Then, the inference device sets the calculated partitioning method of the layer integration section in each inference unit. As a result, in a case where the inference cores are parallelized by the CNN inference processing accelerator, timings of data transfer to the external memory occurring in the start layer and the end layer of the layer integration section of each inference core are shifted, and the external memory bandwidth is smoothed. Therefore, the total external memory bandwidth can be reduced.

### <Second Embodiment>

Next, a second embodiment will be described. The second embodiment is different from the first embodiment in that a method of partitioning a layer integration section is calculated outside the device. Note that in the second embodiment, components similar to those of the first embodiment are denoted by the same reference numerals, and detailed description thereof will be omitted.

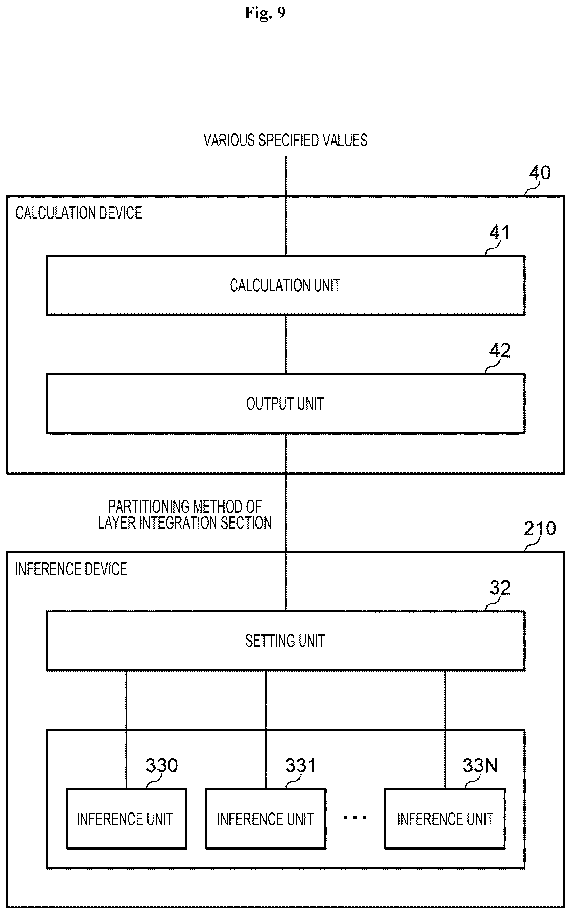

As illustrated in Fig. 9, in the second embodiment, a partitioning method of the layer integration section calculated by a calculation device 40 is set in each inference unit 33 of an inference device 210, that is, each inference core 16.

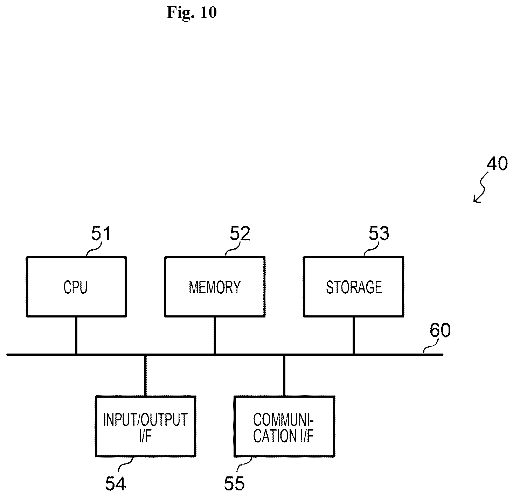

Fig. 10 is a block diagram illustrating a hardware configuration of the calculation device 40 according to the second embodiment. As illustrated in Fig. 10, the calculation device 40 includes a CPU 51, a memory 52 implemented by a RAM or the like, a storage 53, an input/output I/F 54, and a communication I/F 55. The components are communicatively connected to each other via a bus 60. Details of each component are similar to the corresponding component of the hardware configuration of the inference device 10 illustrated in Fig. 2, and thus detailed description thereof will be omitted. Furthermore, since the hardware configuration of the inference device 210 according to the second embodiment is similar to the hardware configuration of the inference device 10 according to the first embodiment illustrated in Fig. 2, the description thereof will be omitted.

Next, a functional configuration of the calculation device 40 will be described. As illustrated in Fig. 9, the calculation device 40 includes a calculation unit 41 and an output unit 42 as functional configurations. The function of the calculation unit 41 is similar to that of the calculation unit 31 of the inference device 10 according to the first embodiment. The output unit 42 outputs the partitioning method of the layer integration section calculated by the calculation unit 41 to the inference device 210.

Next, a functional configuration of the inference device 210 will be described. As illustrated in Fig. 9, the inference device 210 includes, as functional configurations, a setting unit 32 and a plurality of inference units 330, 331, ..., and 33N. The functional configuration of the inference device 210 according to the second embodiment is similar to that of the inference device 10 according to the first embodiment except that the calculation unit 31 is not provided.

Next, an operation of the calculation device 40 according to the second embodiment will be described. The calculation device 40 executes calculation processing similar to the setting processing illustrated in Fig. 5. Note, however, that in step S16, the CPU 11, as the output unit 42, executes processing of outputting the calculated current partitioning method of the layer integration section to the inference device 210. Note that the calculation processing is an example of a calculation method of the disclosed technology.

Next, an operation of the inference device 210 according to the second embodiment will be described. Upon receiving the partitioning method of the layer integration section from the calculation device 40, the inference device 210 sets the partitioning method of the layer integration section in each inference core 16 similarly to the processing of step S16 of the setting processing illustrated in Fig. 5.

As described above, the calculation device according to the second embodiment calculates, for each of the plurality of inference units that performs convolution processing on input data by the layer integration scheme for each layer integration section in which a plurality of layers of the CNN is integrated, a different partitioning method of the layer integration section for each inference unit. Then, the calculation device outputs the calculated partitioning method of the layer integration section to the inference device. The inference device sets the partitioning method of the layer integration section received from the calculation device in each inference unit. As a result, in a case where the inference cores are parallelized by the CNN inference processing accelerator, timings of data transfer to the external memory occurring in the start layer and the end layer of the layer integration section of each inference core are shifted, and the external memory bandwidth is smoothed. Therefore, the total external memory bandwidth can be reduced.

Note that the setting processing or the calculation processing executed by the CPU reading software (program) in each of the above embodiments may be executed by various processors other than the CPU. Examples of the processors in this case include a programmable logic device (PLD) whose circuit configuration can be changed after manufacturing, such as an FPGA, and a dedicated electric circuit that is a processor having a circuit configuration exclusively designed for executing specific processing, such as an application specific integrated circuit (ASIC). Furthermore, the setting processing or the calculation processing may be executed by one of these various processors, or may be executed by a combination of two or more processors of the same type or different types (e.g., a plurality of FPGAs, a combination of a CPU and an FPGA, and the like). More specifically, a hardware structure of the various processors is an electric circuit in which circuit elements such as semiconductor elements are combined.

Furthermore, in the above embodiments, the aspect in which the setting program and the calculation program are stored (installed) in advance in the storage 13 has been described, but the present invention is not limited thereto. The program may be provided in the form of a program stored in a non-transitory storage medium such as a compact disk read only memory (CD-ROM), a digital versatile disk read only memory (DVD-ROM), or a universal serial bus (USB) memory. Furthermore, the program may be downloaded from an external device via a network.

The invention is defined by the independent claims and preferred features are set out in the dependent claims.

### Reference Signs List

- 10, 210: Inference device

- 11,51: CPU
- 12: External memory
- 52: Memory
- 13, 53: Storage
- 14, 54: Input/output I/F
- 15, 55: Communication I/F
- 16: Inference core
- 17: Setting holding unit
- 18: Internal memory
- 19: MAC circuit
- 20, 60: Bus
- 31: Calculation unit
- 32: Setting unit
- 330, 331, 33N: Inference unit
- 40: Calculation device
- 41: Calculation unit
- 42: Output unit

## Claims

1. An inference device (10) comprising:
a plurality of inference units (330, 331, ..., 33N) that performs convolution processing by a layer integration scheme on input data for each of a plurality of layer integration sections in which a plurality of layers of a convolutional neural network is integrated; and
a setting unit (32) that sets, for each of the plurality of inference units (330, 331, ..., 33N), a partition of the layer integration sections that differs among the inference units; wherein the setting unit (32) sets the layer integration sections so that a start layer and an end layer of the layer integration sections do not overlap, thereby shifting a timing of data transfer to an external memory for each inference unit.

2. The inference device (10) according to claim 1 further comprising a calculation unit that calculates a partitioning method of the layer integration section for each of the inference units.

3. The inference device (10) according to claim 2, wherein the calculation unit calculates a band of an external memory used for each of the layer integration sections set for each of the inference units, and calculates a partitioning method of the layer integration sections, in which a maximum value of a band total obtained by adding the bands of the external memory calculated for each of the inference units for each layer is equal to or less than a predetermined target value.

4. The inference device (10) according to claim 3, wherein the calculation unit calculates a band of the external memory used for reading input data of a first layer in the layer integration section from the external memory and writing output data of a last layer in the layer integration section to the external memory as a band of the external memory used for each of the layer integration sections.

5. A calculation device (40) comprising:
a calculation unit (41) that calculates a partitioning method set for each of a plurality of inference units (330, 331, ..., 33N) that performs convolution processing by a layer integration scheme on input data for each of a plurality of layer integration sections in which a plurality of layers of a convolutional neural network is integrated, the partitioning method partitioning the layer integration sections and differing among the inference units (330, 331, ..., 33N); and
an output unit (42) that outputs the partition of the layer integration section calculated by the calculation unit to an inference device (10) including the plurality of inference units (330, 331, ..., 33N), wherein the calculation unit (41) calculates the partitioning method such that the layer integration sections, when set in the inference device (10), have a start layer and an end layer that do not overlap, thereby shifting a timing of data transfer to an external memory for each inference unit.

6. A setting method comprising setting, by a setting unit (32), for each of a plurality of inference units (330, 331, ..., 33N) that performs convolution processing by a layer integration scheme on input data for each of a plurality of layer integration sections in which a plurality of layers of a convolutional neural network is integrated, a different partition of the layer integration sections for each of the inference units (330, 331, ..., 33N); wherein the setting unit (32) sets the layer integration sections so that a start layer and an end layer of the layer integration sections do not overlap, thereby shifting a timing of data transfer to an external memory for each inference unit.

7. A calculation method comprising:
calculating, by a calculation unit (41), a partitioning method set in each of a plurality of inference units (330, 331, ..., 33N) that performs convolution processing by a layer integration scheme on input data for each layer of a plurality of integration sections in which a plurality of layers of a convolutional neural network is integrated, the partitioning method partitioning the layer integration sections and differing among the inference units (330, 331, ..., 33N); and
outputting, by an output unit (42), the partition of the layer integration section calculated by the calculation unit to an inference device (10) including the plurality of inference units (330, 331, ..., 33N), wherein the calculating comprises calculating the partitioning method such that the layer integration sections, when set in the inference device (10), have a start layer and an end layer that do not overlap, thereby shifting a timing of data transfer to an external memory for each inference unit.

8. A calculation program for causing a computer to function as each unit according to claim 5.

## Patentansprüche

1. Inferenzvorrichtung (10), umfassend:
eine Vielzahl von Inferenzeinheiten (330, 331, ..., 33N), die eine Faltungsverarbeitung durch ein Schichtintegrationsschema an Eingangsdaten für jeden einer Vielzahl von Schichtintegrationsabschnitten durchführt, in denen eine Vielzahl von Schichten eines faltenden neuronalen Netzwerks integriert ist; und
eine Festlegungseinheit (32), die für jede der Vielzahl von Inferenzeinheiten (330, 331, ..., 33N) eine Aufteilung der Schichtintegrationsabschnitte festlegt, die sich zwischen den Inferenzeinheiten unterscheidet; wobei die Festlegungseinheit (32) die Schichtintegrationsabschnitte so festlegt, dass eine Startschicht und eine Endschicht der Schichtintegrationsabschnitte sich nicht überlappen, wodurch ein Zeitpunkt einer Datenübertragung an einen externen Speicher für jede Inferenzeinheit verschoben wird.

2. Inferenzvorrichtung (10) nach Anspruch 1, ferner umfassend eine Berechnungseinheit, die ein Aufteilungsverfahren des Schichtintegrationsabschnitts für jede der Inferenzeinheiten berechnet.

3. Inferenzvorrichtung (10) nach Anspruch 2, wobei die Berechnungseinheit eine Bandbreite eines externen Speichers berechnet, die für jeden der Schichtintegrationsabschnitte verwendet wird, die für jede der Inferenzeinheiten festgelegt sind, und ein Aufteilungsverfahren der Schichtintegrationsabschnitte berechnet, bei dem ein Maximalwert einer Bandbreitensumme, die durch Addieren der Bandbreiten des externen Speichers erhalten wird, die für jede der Inferenzeinheiten für jede Schicht berechnet werden, gleich oder kleiner als ein vorbestimmter Zielwert ist.

4. Inferenzvorrichtung (10) nach Anspruch 3, wobei die Berechnungseinheit eine Bandbreite des externen Speichers, die zum Lesen von Eingangsdaten einer ersten Schicht in dem Schichtintegrationsabschnitt aus dem externen Speicher und zum Schreiben von Ausgangsdaten einer letzten Schicht in dem Schichtintegrationsabschnitt in den externen Speicher verwendet wird, als eine Bandbreite des externen Speichers berechnet, die für jeden der Schichtintegrationsabschnitte verwendet wird.

5. Berechnungsvorrichtung (40), umfassend:
eine Berechnungseinheit (41), die ein Aufteilungsverfahren berechnet, das für jede einer Vielzahl von Inferenzeinheiten (330, 331, ..., 33N) festgelegt ist, die die Faltungsverarbeitung durch ein Schichtintegrationsschema an Eingangsdaten für jeden einer Vielzahl von Schichtintegrationsabschnitten durchführt, in denen eine Vielzahl von Schichten eines faltenden neuronalen Netzwerks integriert ist, wobei das Aufteilungsverfahren die Schichtintegrationsabschnitte aufteilt und sich zwischen den Inferenzeinheiten (330, 331, ..., 33N) unterscheidet; und
eine Ausgabeeinheit (42), die die Aufteilung des Schichtintegrationsabschnitt, die durch die Berechnungseinheit berechnet wird, an eine Inferenzvorrichtung (10) ausgibt, die die Vielzahl von Inferenzeinheiten (330, 331, ..., 33N) einschließt, wobei die Berechnungseinheit (41) das Aufteilungsverfahren derart berechnet, dass die Schichtintegrationsabschnitte, wenn sie in der Inferenzvorrichtung (10) festgelegt sind, eine Startschicht und eine Endschicht aufweisen, die sich nicht überlappen, wodurch ein Zeitpunkt der Datenübertragung an einen externen Speicher für jede Inferenzeinheit verschoben wird.

6. Festlegungsverfahren, umfassend das Festlegen, durch eine Festlegungseinheit (32), für jede einer Vielzahl von Inferenzeinheiten (330, 331, ..., 33N), die die Faltungsverarbeitung durch ein Schichtintegrationsschema an Eingangsdaten für jeden einer Vielzahl von Schichtintegrationsabschnitten durchführt, in denen eine Vielzahl von Schichten eines faltenden neuronalen Netzwerks integriert ist, einer unterschiedlichen Aufteilung der Schichtintegrationsabschnitte für jede der Inferenzeinheiten (330, 331, ..., 33N); wobei die Festlegungseinheit (32) die Schichtintegrationsabschnitte so festlegt, dass eine Startschicht und eine Endschicht der Schichtintegrationsabschnitte sich nicht überlappen, wodurch ein Zeitpunkt einer Datenübertragung an einen externen Speicher für jede Inferenzeinheit verschoben wird.

7. Berechnungsverfahren, umfassend:
Berechnen, durch eine Berechnungseinheit (41), eines Aufteilungsverfahrens, das in jeder einer Vielzahl von Inferenzeinheiten (330, 331, ..., 33N) festgelegt ist, die eine Faltungsverarbeitung durch ein Schichtintegrationsschema an Eingangsdaten für jede Schicht einer Vielzahl von Integrationsabschnitten durchführen, in denen eine Vielzahl von Schichten eines faltenden neuronalen Netzwerks integriert ist, wobei das Aufteilungsverfahren die Schichtintegrationsabschnitte aufteilt und sich zwischen den Inferenzeinheiten (330, 331, ..., 33N) unterscheidet; und
Ausgeben, durch eine Ausgabeeinheit (42), der Aufteilung des Schichtintegrationsabschnitt, die durch die Berechnungseinheit berechnet wird, an eine Inferenzvorrichtung (10), die die Vielzahl von Inferenzeinheiten (330, 331, ..., 33N) einschließt, wobei das Berechnen umfasst, das Aufteilungsverfahren derart zu berechnen, dass die Schichtintegrationsabschnitte, wenn sie in der Inferenzvorrichtung (10) festgelegt sind, eine Startschicht und eine Endschicht aufweisen, die sich nicht überlappen, wodurch ein Zeitpunkt der Datenübertragung an einen externen Speicher für jede Inferenzeinheit verschoben wird.

8. Berechnungsprogramm zum Veranlassen eines Computers, als jede Einheit nach Anspruch 5 zu funktionieren.

## Revendications

1. Dispositif d'inférence (10) comprenant:
une pluralité d'unités d'inférence (330, 331, ..., 33N) qui réalisent un traitement de convolution par un schéma d'intégration de couches sur des données d'entrée pour chacune d'une pluralité de sections d'intégration de couches dans lesquelles une pluralité de couches d'un réseau neuronal convolutif est intégrée; et
une unité de définition (32) qui définit, pour chacune de la pluralité d'unités d'inférence (330, 331, ..., 33N), une partition des sections d'intégration de couches qui diffère parmi les unités d'inférence; dans lequel l'unité de définition (32) définit les sections d'intégration de couches de sorte qu'une couche de début et une couche de fin des sections d'intégration de couches ne se chevauchent pas, décalant ainsi une synchronisation de transfert de données vers une mémoire externe pour chaque unité d'inférence.

2. Dispositif d'inférence (10) selon la revendication 1, comprenant en outre une unité de calcul qui calcule un procédé de partitionnement de la section d'intégration de couches pour chacune des unités d'inférence.

3. Dispositif d'inférence (10) selon la revendication 2, dans lequel l'unité de calcul calcule une bande d'une mémoire externe utilisée pour chacune des sections d'intégration de couches définies pour chacune des unités d'inférence, et calcule un procédé de partitionnement des sections d'intégration de couches, dans lequel une valeur maximale d'un total de bande obtenue en ajoutant les bandes de la mémoire externe calculée pour chacune des unités d'inférence pour chaque couche est égale ou inférieure à une valeur cible prédéterminée.

4. Dispositif d'inférence (10) selon la revendication 3, dans lequel l'unité de calcul calcule une bande de la mémoire externe utilisée pour lire des données d'entrée d'une première couche dans la section d'intégration de couches à partir de la mémoire externe et écrire des données de sortie d'une dernière couche dans la section d'intégration de couches sur la mémoire externe en tant que bande de la mémoire externe utilisée pour chacune des intégrations de couche sections.

5. Dispositif de calcul (40) comprenant:
une unité de calcul (41) qui calcule un ensemble de procédés de partitionnement pour chacune d'une pluralité d'unités d'inférence (330, 331, ..., 33N) qui réalise un traitement de convolution par un schéma d'intégration de couches sur des données d'entrée pour chacune d'une pluralité de sections d'intégration de couches dans lesquelles une pluralité de couches d'un réseau neuronal convolutif est intégrée, le procédé de partitionnement partitionnant les sections d'intégration de couches et différant parmi les unités d'inférence (330, 331, ..., 33N); et
une unité de sortie (42) qui délivre la partition de la section d'intégration de couches calculée par l'unité de calcul à un dispositif d'inférence (10) comportant la pluralité d'unités d'inférence (330, 331, ..., 33N), dans lequel l'unité de calcul (41) calcule le procédé de partitionnement de telle sorte que les sections d'intégration de couches, lorsqu'elles sont définies dans le dispositif d'inférence (10), ont une couche de début et une couche de fin qui ne se chevauchent pas, décalant ainsi une synchronisation de transfert de données vers une mémoire externe pour chaque unité d'inférence.

6. Procédé de définition comprenant la définition, par une unité de définition (32), pour chacune d'une pluralité d'unités d'inférence (330, 331, ..., 33N) qui réalise un traitement de convolution par un schéma d'intégration de couches sur des données d'entrée pour chacune d'une pluralité de sections d'intégration de couches dans lesquelles une pluralité de couches d'un réseau neuronal convolutif est intégrée, d'une partition différente des sections d'intégration de couches pour chacune des unités d'inférence (330, 331, ..., 33N); dans lequel l'unité de définition (32) définit les sections d'intégration de couches de sorte qu'une couche de début et une couche de fin des sections d'intégration de couches ne se chevauchent pas, décalant ainsi une synchronisation de transfert de données vers une mémoire externe pour chaque unité d'inférence.

7. Procédé de calcul comprenant:
le calcul, par une unité de calcul (41), d'un procédé de partitionnement défini dans chacune d'une pluralité d'unités d'inférence (330, 331, ..., 33N) qui réalise un traitement de convolution par un schéma d'intégration de couches sur des données d'entrée pour chaque couche d'une pluralité de sections d'intégration dans lesquelles une pluralité de couches d'un réseau neuronal convolutif est intégrée, le procédé de partitionnement partitionnant les sections d'intégration de couches et différant parmi les unités d'inférence (330, 331, ..., 33N); et
la sortie, par une unité de sortie (42), de la partition de la section d'intégration de couches calculée par l'unité de calcul à un dispositif d'inférence (10) comportant la pluralité d'unités d'inférence (330, 331, ..., 33N), dans lequel le calcul comprend le calcul du procédé de partitionnement de telle sorte que les sections d'intégration de couches, lorsqu'elles sont définies dans le dispositif d'inférence (10), ont une couche de début et une couche de fin qui ne se chevauchent pas, décalant ainsi une synchronisation de transfert de données vers une mémoire externe pour chaque unité d'inférence.

8. Programme de calcul permettant d'amener un ordinateur à fonctionner en tant que chaque unité selon la revendication 5.
